# EUROPÄISCHE PATENTSCHRIFT

(11) **EP 4 065 947 B1**
(45) Veröffentlichungstag und Bekanntmachung des Hinweises auf die Patenterteilung: **11.12.2024**
(21) Anmeldenummer: 20792976.1
(22) Anmeldetag: 15.10.2020
(51) Int. Cl.: G01M 3/32, G01M 17/02, G01M 3/24

(54) **FAHRZEUG UMFASSEND MINDESTENS EIN FAHRZEUGRAD MIT EINEM EINEN REIFENINNENRAUM UMFASSENDEN FAHRZEUGLUFTREIFEN UND EIN, ZWEI ODER MINDESTENS DREI SCHALLWELLENEMPFÄNGER ZUM MEHRFACHEN ODER KONTINUIERLICHEN ERFASSEN VON LUFTSCHALLWELLENSIGNALEN UND EIN ENTSPRECHENDES VERFAHREN**
VEHICLE COMPRISING AT LEAST ONE VEHICLE WHEEL HAVING A VEHICLE PNEUMATIC TIRE COMPRISING A TIRE INTERIOR SPACE, AND ONE, TWO OR AT LEAST THREE SOUND WAVE RECEIVERS FOR REPEATED OR CONTINUOUS DETECTION OF AIRBORNE SOUND WAVE SIGNALS AND A CORRESPONDING METHOD
VÉHICULE COMPRENANT AU MOINS UNE ROUE DE VÉHICULE AYANT UN PNEUMATIQUE DE VÉHICULE COMPRENANT UN ESPACE INTÉRIEUR DE PNEUMATIQUE, ET UN, DEUX OU AU MOINS TROIS RÉCEPTEURS D'ONDES SONORES POUR LA DÉTECTION RÉPÉTÉE OU CONTINUE DE SIGNAUX D'ONDES SONORES AÉRIENNES ET PROCÉDÉ CORRESPONDANT

(30) Priorität: 28.11.2019 DE 102019218422
(43) Veröffentlichungstag der Anmeldung: 05.10.2022
(73) Patentinhaber: Continental Reifen Deutschland GmbH, 30175 Hannover (DE)
(72) Erfinder: DAHLKE, Markus, 30419 Hannover (DE); BECKER, Raymond, 30419 Hannover (DE)
(74) Vertreter: Continental Corporation
(86) Internationale Anmeldenummer: PCT/EP2020/079024
(87) Internationale Veröffentlichungsnummer: WO 2021/104743

(56) Entgegenhaltungen:
- EP-A1- 0 069 402
- CN-A- 107 796 639
- US-A- 4 491 013
- US-A1- 2019 241 023

## Beschreibung

Die Erfindung betrifft ein Fahrzeug umfassend mindestens ein Fahrzeugrad mit einem einen Reifeninnenraum umfassenden Fahrzeugluftreifen.

Die Erfindung betrifft auch ein Verfahren zum mehrfachen oder kontinuierlichen Erfassen von Luftschallwellensignalen von einem Fahrzeugluftreifen eines Fahrzeugrades eines Fahrzeuges.

Auf dem vorliegenden Fachgebiet ist der Einsatz von Reifenreparaturkits zum Abdichten von Leckagen in Reifen hinlänglich bekannt. Die am häufigsten angewendete Anwendungsart dieser Reparaturkits ist das Aufpumpen und Abdichten des undichten Reifens, nachdem das Fahrzeug aufgrund eines Warnsignals über eine Abnahme des Reifeninnendrucks angehalten wurde. Hierbei wird häufig ein entsprechendes Warnsignal dem Fahrer mitgeteilt, sobald der Reifeninnendruck unter einen bestimmten Schwellwert fällt. Weitere Informationen über die Leckage an dem undichten Reifen können nicht erfasst werden. Je nach Art der Leckage am Reifen könnten jedoch verschiedene Anwendungsarten zum Abdichten oder zum Hilferufen angewandt werden. Hierzu wäre es jedoch hilfreich, wenn mehr Informationen über die entstandene oder entstehende Leckage zu Verfügung ständen.

Im Stand der Technik sind verschiedene Vorrichtungen bekannt:
EP 0060469 A1 offenbart einen nicht-zerstörenden Reifentestapparat mit einem akustischen Ultraschallwellensender und einem akustischen Ultraschallwellenempfänger, welche auf der je gegenüberliegenden Seite einer Reifenwand angeordnet sind (vgl. Anspruch 1).

EP 0392859 A2 offenbart ein nicht-zerstörendes Testverfahren mit einem akustischen Ultraschallwellensender und einem akustischen Ultraschallwellenempfänger, welche auf der je gegenüberliegenden Seite einer Reifenwand angeordnet sind (vgl. Anspruch 1).

GB 571817 A offenbart eine Vorrichtung zur Detektion von Fehlern in dem Material von Artikeln, wobei die Vorrichtrung Mittel zum Erzeugen von varriierbaren Hochfrequenzschallwellen und Mittel zum Ausrichten der Schallwellen auf die Oberfläche des Artikels sowie Mittel zum Erfassen von Schallwellen auf der gegenüberliegenden Seite der besagten Oberfläche des Artikels umfasst (vgl. Zeilen 11 bis 20, auf Seite 1).

JP H0244247 A offenbart eine Ultraschall-Messeinheit umfassend einen Harzkeil ("Resin wedge", vgl. Abstract).

US 4327579 A offenbart eine Ultraschall-Vehikeltestvorrichtung umfassend ein Array von Ultraschall-sendenden Transduktoren und ein Array von Ultraschall-empfangenden Transduktoren (vgl. Anspruch 1). Ein Fahrzeug mit einem Reifengeräuschmesssystem ist aus CN 107796639 A bekannt. US 4491013 A offenbart einen Reifenprüfstand mit Ultraschallsensor zur Reifenlackagedetektion.

Gelöst wird diese Aufgabe erfindungsgemäß durch ein Fahrzeug nach Anspruch 1.

Es ist eine große Leistung der vorliegenden Erfindung, herausgefunden zu haben, dass die Leckage eines Fahrzeugluftreifens eines Fahrzeuges während des Fahrens des Fahrzeuges mit einer erfindungsgemäßen Vorrichtung detektiert werden kann, wobei der Schallwellenempfänger der erfindungsgemäßen Vorrichtung außerhalb des Reifeninnenraumes angebracht ist und auf die äußere Reifenoberfläche des Fahrzeugreifens gerichtet ist. Durch diese spezielle Schallwellenempfänger-Anordnung außerhalb des Reifeninnenraums kann während des Fahrens nicht nur eine Leckage bereits beim Entstehen, also bevor der Reifeninnendruckabfall im Reifen einen Schwellwert unterschreitet, erkannt werden, sondern es können auch qualitative Informationen über die entstandene oder entstehende Leckage erfasst werden.

Die vorstehend beschriebenen und aus dem Stand der Technik bekannten Dokumente weisen dagegen ausschließlich Schallwellenempfänger innerhalb des Reifeninnenraums auf, mit denen die entsprechende Detektion einer Leckage in einem Fahrzeugluftreifen an einem Fahrzeug während des Fahrbetriebes nur unter sehr speziellen Voraussetzungen gemessen werden kann. Die Detektion einer Leckage im Fahrzeugluftreifen mit einem Schallempfänger außerhalb des Reifeninnenraums konnte nach derzeitigem Kenntnisstand bisher noch nicht erreicht werden.

Das Anbringen des Schallwellenempfängers außerhalb des Reifeninnenraums des Fahrzeugluftreifens ermöglicht nicht nur eine problemlose Detektion während des Fahrens eines erfindungsgemäßen Fahrzeuges, sondern zusätzlich auch eine derart ausreichend genaue Detektion, dass qualitative Informationen über die Leckage erfasst werden können. Diese spezielle Anordnung mit dem Schallempfänger außerhalb des Reifeninnenraums stellt somit die Überwindung eines technischen Vorurteils aus dem Stand der Technik und somit eine besondere Leistung der vorliegenden Erfindung dar.

Ein weiterer Vorteil der vorliegenden Erfindung gegenüber dem Stand der Technik ist, dass mittels einer erfindungsmäßen Vorrichtung in einem Fahrzeug wie vorstehend beschrieben eine Leckage eines Fahrzeugluftreifens des Fahrzeuges non-invasiv detektiert werde kann, d.h. zum Beispiel ohne dass Einfüllen einer Flüssigkeit in den Innenraum des Fahrzeugluftreifens oder ohne das Tauchen des Fahrzeugluftreifens in einer Flüssigkeit eine Leckage in dem Fahrzeugluftreifen detektiert werden kann. Erst dies ermöglicht das Detektieren während des Fahrbetriebes je nach Ort der Leckage.

Die durch eine Leckage eines Fahrzeugluftreifens entstehenden Luftschallwellen werden insbesondere von solchen Schallwellenempfängern ausreichend gut detektierten, welche in Richtung des Laufstreifens des Fahrzeugluftreifens, in Richtung der vom Fahrzeug aus gesehen innen liegenden Seitenwand des Fahrzeugluftreifens oder in Richtung der vom Fahrzeug aus gesehen innen außen liegenden Seitenwand des Fahrzeugluftreifens ausgerichtet sind.

Als Beispiel eines Schallwellenempfängers einer erfindungsgemäßen Vorrichtung sind aus dem Stand der Technik gewöhnliche Schallwandler wie Mikrofone, welche Schallwellen mit einer Frequenz von 4 Hz bis 100 kHz aufnehmen können, geeignet. Ein entsprechendes Beispiel eines solchen Mikrofons wäre das Produkt der Firma "PCB piezotronics" mit der Produktnummer "378C01".

Im Rahmen der vorliegenden Erfindung umfasst der Ausdruck "Schall" insbesondere der Luftschall gemeint. Im Rahmen der vorliegenden Erfindung umfasst der Ausdruck "Ultraschall" Schallwellen mit einer Frequenz von 1 kHz bis 1 GHz. Schallwellen mit einer Frequenz von über 1 GHz werden im Rahmen der vorliegenden Erfindung als "Hyperschall" bezeichnet.

Bevorzugt ist ein erfindungsgemäßes Fahrzeug wie vorstehend beschrieben oder wie vorstehend als bevorzugt beschrieben, wobei die Filtereinheit
- ein Hochpassfilter ist,
   oder
- ein Bandpassfilter ist und der Bandpassfilter dazu eingerichtet ist, Signalanteile eines Luftschallwellensignals mit Frequenzen unter 35 kHz und über 45 kHz herauszufiltern, bevorzugt Signalanteile eines Luftschallwellensignals mit Frequenzen unter 38 kHz und über 42 kHz.

Eine vorstehend beschriebene Filtereinheit eines erfindungsgemäßen Fahrzeuges kann auch mittels einer Steuereinheit wie nachstehend beschrieben elektronisch realisiert werden.

Besonders bevorzugt ist ein erfindungsgemäßes Fahrzeug wie vorstehend beschrieben oder wie vorstehend als bevorzugt beschrieben, wobei das Fahrzeug mindestens eine Filtereinheit umfasst, welche dazu eingerichtet ist, Signalanteile eines Luftschallwellensignals mit Frequenzen unter 28 kHz und über 36 kHz herauszufiltern, wobei die eine oder die mindestens eine Filtereinheit ein Bandpassfilter ist. Der Vorteil ist, dass in diesem Signalbereich besonders gute Signalrausch-Verhältnisses (SNR) erreicht werden.

Ein Vorteil des vorstehend beschriebenen Aspekts der vorliegenden Erfindung ist, dass insbesondere durch das Herausfiltern von Hintergrundgeräuschen mit Frequenzen außerhalb der vorstehend beschriebenen Bereiche die Schallwellen, welcher durch eine Leckage erzeugt werden, problemlos und schnell detektiert werden können. Durch diese schnelle Detektion der Leckage ist es möglich, Leckagen schon während des Entstehens beim Fahren mit dem Fahrzeug zu erkennen. Dies stellt eine besondere Leistung der vorliegenden Erfindung gegenüber Detektionsverfahren aus dem Stand der Technik dar. Insbesondere hätte der Fachmann nicht erwartet das durch das Anbringen des Schallwellenempfängers außerhalb des Reifeninnenraums des Fahrzeugluftreifens und dem Herausfiltern der vorstehend beschriebenen Frequenzbereiche aus den Schallwellensignalen eine so zuverlässige Detektion während des Fahrens eines Fahrzeuges möglich gewesen wäre. Dies wird insbesondere durch die nachstehend beschriebene Verbesserung des Signalrausch-Verhältnisses gemäß den nachstehend beschriebenen Experimenten gezeigt. Insbesondere konnte aufgrund von den somit erreichten Signalrausch-Verhältnisse anhand der Höhe und Breite des Signals sogar qualitative Informationen über die Form und die Geometrie der Leckage gewonnen werden.

Signale, welche besonders bereit sind, weisen hiermit beispielsweise daraufhin, dass sich der Riss im Reifen entlang der Umfangsrichtung des Fahrzeugluftreifens erstreckt, wodurch insbesondere auch auf die Länge des Risses geschlossen werden kann. Somit kann eine nachstehend beschriebene Steuerungseinheit sofort ermitteln, ob die Leckage mittels eines Reifenreparaturkits abgedichtet werden kann oder ob direkt ein Notrufsignal an einen Abschleppdienst oder einen ähnlichen Anbieter gesendet werden sollte. Dies würde den verunsicherten Fahrer in einer ungewohnten Pannensituation sehr helfen. Besonders bevorzugt ist es jedoch, verschiedene Hochpassfilter und Bandpassfilter in einer erfindungsgemäßen Filtereinheit anzuwenden, und so zusätzlich auch die Frequenz des von der Leckage ausgelösten Schallwellensignals genau bestimmen zu können, um vorteilhafterweise noch weitere geometrische Informationen über die Leckage aus den somit detektierten Frequenzen zu gewinnen.

Da die Frequenz auch von dem Innendruck des Reifens anhängig ist, kann man mittelbar auch auf den Innendruck des Reifens schließen.

Bevorzugt ist ein erfindungsgemäßes Fahrzeug wie vorstehend beschrieben oder wie vorstehend als bevorzugt beschrieben, wobei das Fahrzeug eine Steuerungseinheit umfasst, welche dazu eingerichtet ist,
- zwei oder mehr als zwei von einen oder mehreren der Schallwellenempfänger erfasste Luftschallwellensignale
   oder
- zwei oder mehr als zwei von einer der Filtereinheiten gefilterte Luftschallwellensignale
zu vergleichen, wobei die Luftschallwellensingale von derselben Leckage stammen.

Ein Vorteil des vorstehend beschriebenen Aspekts der vorliegenden Erfindung ist, dass durch das mehrfache Aufnehmen des von der Leckage stammenden Schallwellensignals nicht nur Informationen über die Geometrie oder die Größe der Leckage bei dem jeweils aufgenommen Schallwellensignal erfasst werden können, sondern auch insbesondere Veränderungen in der Größe und in der Geometrie aufgrund der Veränderung des Schallwellensignals pro Reifenumdrehung detektierten werden können.

Bevorzugt ist ein erfindungsgemäßes Fahrzeug wie vorstehend beschrieben oder wie vorstehend als bevorzugt beschrieben, wobei das Fahrzeugrad des Fahrzeuges oder der Fahrzeugluftreifen des Fahrzeugrades des Fahrzeugs einen Drucksensor zum Messen des Reifeninnendrucks umfasst und der Drucksensor mit einer oder der Steuerungseinheit verbunden ist, wobei die Steuereinheit in Abhängigkeit des Druckabfalls pro Zeiteinheit und in Abhängigkeit der Amplitude der erfassten oder gefilterten Luftschallwellensignale in dieser Zeiteinheit eine quantitative Aussage über die Größe und/oder Form der Leckage bestimmt.

Ein Vorteil des vorstehend beschriebenen Aspekts der vorliegenden Erfindung ist, dass durch die Auswertung der Signale des Drucksensor und der Amplitude der Luftschallwellensignale noch zuverlässiger Informationen über die Form oder Geometrie der Leckage des Verzug Luftreifen gewonnen werden können. Dadurch kann noch zuverlässiger von der Steuerungseinheit bestimmt werden, ob ein Notruf oder die Verwendung eines Reifenreparaturkits eingeleitet werden soll.

Bevorzugt ist ein erfindungsgemäßes Fahrzeug wie vorstehend beschrieben oder wie vorstehend als bevorzugt beschrieben, wobei das Fahrzeugrad des Fahrzeuges oder der Fahrzeugluftreifen des Fahrzeugrades des Fahrzeugs ein Reifenreparaturkit zum Abdichten eines undichten Fahrzeugluftreifens umfasst und das Reifenreparaturkit mit einer oder der Steuerungseinheit verbunden ist, wobei die Steuereinheit dazu eingerichtet ist, in Abhängigkeit des Druckabfalls pro Zeiteinheit und/oder in Abhängigkeit der Amplitude des gefilterten Signals in dieser Zeiteinheit das Reifenreparaturkit zum Abdichten der Leckage des Fahrzeugluftreifens zu aktivieren, wobei das Reifenreparaturkit bevorzugt dazu ausgelegt ist, sowohl während des Fahrbetriebes als auch außerhalb des Fahrbetriebes zum Abdichten oder Aufpumpen von Fahrzeugluftreifen verwendet zu werden.

Ein Vorteil des vorstehend beschriebenen Aspekts der vorliegenden Erfindung ist, dass mittels einer erfindungsgemäßen Vorrichtung in einem erfindungsgemäßen Fahrzeug wie vorstehend beschrieben Leckage so frühzeitig erkannt werden können, dass die entstehende Leckage mittels eines integrierten Reifenreparaturkit wie vorstehend beschrieben noch während des Fahrens repariert werden könnte und somit der Fahrer vorteilhafterweise nicht mehr anhalten, sondern nur langsamer fahren muss, um den Fahrzeugluftreifen. Dies stellt einen besonderen Vorteil der vorliegenden Erfindung dar.

Besonders bevorzugt ist ein erfindungsgemäßes Fahrzeug wie vorstehend beschrieben oder wie vorstehend als bevorzugt beschrieben, wobei zwei oder drei Schallwellenempfänger so am Fahrzeug angebracht und dafür vorgesehen sind, dass der eine Schallwellenempfänger Schallwellen einer Leckage im Laufstreifen des Fahrzeugluftreifens messen kann und der zweite Schallwellenempfänger Schallwellen einer Leckage in der vom Fahrzeug aus gesehen äußeren Seitenwand des Fahrzeugluftreifens messen kann und optional der dritter Schallwellenempfänger Schallwellen einer Leckage in der vom Fahrzeug aus gesehen innere Seitenwand des Fahrzeugluftreifens messen kann.

Ein Vorteil des vorstehend beschriebenen Aspekts der vorliegenden Erfindung ist, dass mittels der verschiedenen vorstehend beschriebenen Schallwellenempfänger zuverlässig Leckage im Laufstreifen und in den Seitenwänden eines Fahrzeugluftreifens während des Fahrens getätigt werden können.

Bevorzugt ist ein erfindungsgemäßes Fahrzeug wie vorstehend beschrieben oder wie vorstehend als bevorzugt beschrieben, wobei der eine Schallwellenempfänger oder einer der Schallwellenempfänger oder sämtliche Schallwellenempfänger eine akustische Linse zum Verstärken der zu erfassenden Luftschallwellensignale umfasst und die akustische Linse auf eine Außenwand des Fahrzeugluftreifens des Fahrzeugrades des Fahrzeuges gerichtet ist.

Ein Vorteil des vorstehend beschriebenen Aspekts der vorliegenden Erfindung ist, dass das Signalrausch-Verhältnis durch die Verwendung einer akustischen Linse wie vorstehend beschrieben noch weiter verbessert werden kann.

Die vorstehend beschriebenen vorteilhaften Aspekte eines erfindungsgemäßen Fahrzeuges gelten auch für sämtliche Aspekte eines nachstehend beschriebenen Verfahrens und die nachstehend diskutierten vorteilhaften Aspekte erfindungsgemäßer Verfahren gelten entsprechend für sämtliche Aspekte eines erfindungsgemäßen Fahrzeuges.

Die Erfindung betrifft auch ein Verfahren wie in Anspruch 7 definiert.

Ein Vorteil des vorstehend beschriebenen Verfahrens ist, dass gleichzeitig mehrere Stellen des Fahrzeugluftreifens überwacht werden können und dass insbesondere die Veränderung einer Leckage, sei es die Vergrößerung der Leckage oder deren Verkleinerung beim Abdichten, erkannt werden können.

Im Rahmen der vorliegenden Erfindung bezeichnet der Ausdruck "zeitlich versetzte Signale" mindestens zwei Signale, welche zu verschiedenen Zeitpunkten aber am gleichen Ort aufgenommen wurden.

Im Rahmen der vorliegenden Erfindung bezeichnet der Ausdruck "räumlich versetzte Signale" mindestens zwei Signale, welche
- an verschiedenen Orten
   und
- gleichzeitig oder verschiedenzeitig
aufgenommen wurden.

Bevorzugt ist ein erfindungsgemäßes Verfahren wie vorstehend beschrieben oder wie vorstehend als bevorzugt beschrieben, wobei der technische Gummiartikel und der Schallwellenempfänger zumindest während Schritt C), bevorzugt während des gesamten Verfahrens, relativ zueinander bewegt werden, wobei bevorzugt der technische Gummiartikel relativ zum Schallwellenempfänger rotiert wird und der technische Gummiartikel besonders bevorzugt ein Fahrzeugluftreifen ist.

Ein Vorteil des vorstehend beschriebenen Aspekts der vorliegenden Erfindung ist, dass durch die Relativbewegung Leckage an verschiedenen Stellen des technischen Gummiartikels detektiert werden können.

Das Herausfiltern mittels der besagten Filtereinheit kann auch mittels einer vorstehend oder nachstehend beschriebenen Steuerungseinheit, auch Verarbeitungseinheit genannt, durchgeführt werden.

Ein Vorteil des vorstehend beschriebenen Aspekts der vorliegenden Erfindung ist, dass auf diese Weise wie vorstehend beschrieben besonders gute Signalrausch-Verhältnisse erreicht werden, wie dies auch nachstehend in den experimentellen Daten dargelegt ist.

Bevorzugt ist ein erfindungsgemäßes Verfahren wie vorstehend beschrieben oder wie vorstehend als bevorzugt beschrieben, wobei die in Schritt B) bewirkte Leckage einen Durchmesser im Bereich von 1 µm bis 50 mm aufweist, bevorzugt 0,1 mm bis 20 mm. Ein Vorteil des vorstehend beschriebenen Aspekts der vorliegenden Erfindung ist, dass mit einem erfindungsgemäßen Verfahren auch solche kleine Leckagen wie vorstehend beschrieben erkannt werden können, da wie in den nachstehend beschriebenen experimentellen Daten dargelegt das Signalrausch-Verhältnis im Rahmen der vorliegenden Erfindung erheblich verbessert werden konnte.

### Figurenbeschreibung:

Es zeigt:

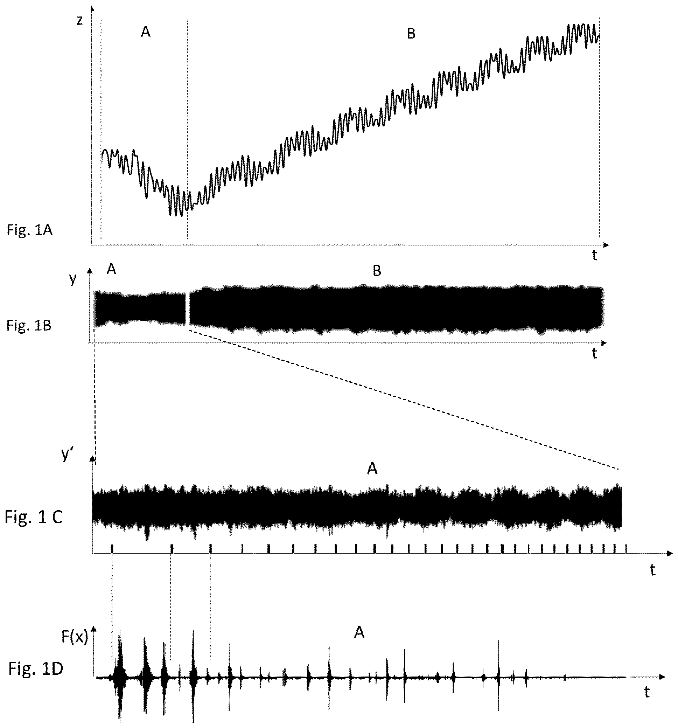

- Figur 1A:: Graphische Darstellung der Messergebnisse einer Luftdruckmessung im Reifeninnenraum eines Reifens (Z-Achse) während der Rotation des Reifens mit drei Leckage und mit einem Dichtmittel im Reifeninnenraum des Reifens;
- Figur 1B:: Graphische Darstellung der Messergebnisse der mittels des Mikrofons aufgezeichnete Intensität der Schallwellen sowohl während der Phase A als auch während der Phase B gemäß Figur 1A gezeigt;
- Figur 1C:: Graphische Darstellung der Messergebnisse der mittels des Mikrofons aufgezeichnete Intensität der Schallwellen während der Phase A gemäß Figur 1A;
- Figur 1D:: Graphische Darstellung der mittels Bandpassfitlers gefilterten Messergebnisse der ausschließlich die während der Phase A des Experiments mittels des Mikrofons aufgezeichnete Intensität der Schallwellen, wobei die gezeigten Messdaten ausschließlich die Schallwellensignale aus der Figur 1C, welche in einer Frequenz von 35 bis 45 kHz liegen, umfassen.

Figur 1A zeigt einen Graphen in dem die Messergebnisse einer Luftdruckmessung im Reifeninnenraum eines Reifens (Z-Achse) während der Rotation des Reifens mit drei Leckage und mit einem Dichtmittel im Reifeninnenraum des Reifens. In Figur 1A ist der Graph mittels drei senkrechter gestrichelten Linien in eine Phase A und in einem Bereich B aufgeteilt. Zum Zeitpunkt t = 0 werden in den rotierenden Reifen mit dem in seinem Reifeninnenraum enthaltenen Dichtmittel drei Leckagen hineingestochen. Daraufhin ist ein Abfall des Luftdruckes im Reifeninnenraum zu beobachten, wie dies in der Phase A zwischen den ersten beiden senkrechten Linien in Figur 1A zu sehen ist. Anschließend wird ein Anstieg des Luftdruckes im Reifeninnenraum in der Phase B beobachtet. Während des gesamten Experiments, insbesondere während der Phase A und der Phase B sowie vor und nach dem Stechen der drei Leckagen in den Fahrzeugluftreifens, wurde Luft mittels eines Kompressors in den Reifeninnenraum des Reifens gedrückt wird. Gleichzeitig wurden während des gesamten Experiments die Schallwellen, welche von dem Reifen mit den drei Leckagen kommen, mittels eines auf den Reifen mit den drei Leckagen gerichteten Mikrofon aufgenommen. Der Druckanstieg in der Phase B ist dabei auf das Abdichten der drei Leckagen mittels des im Reifen enthaltenen Dichtmittels zurückzuführen.

Figur 1B zeigt die während des Experiments mittels des Mikrofons aufgezeichnete Intensität der Schallwellen sowohl während der Phase A als auch während der Phase B. Das in Figur 1B gezeigte Schallwellensignal umfasst dabei Schallwellensignale mit einer Frequenz von 4 kHz bis 100 kHz.

Figur 1C zeigt ausschließlich die während der Phase A des Experiments mittels des Mikrofons aufgezeichnete Intensität der Schallwellen. Dies würde zudem durch die Zwischenfigur 1B und Figur 1C gezeigten gestrichelten Linien angedeutet. Das in Figur 1C gezeigte Schallwellensignal umfasst dabei Schallwellensignale mit einer Frequenz von 4 kHz bis 100 kHz. Zudem sind mittels senkrechten Strichen an der horizontal verlaufenden Zeitachse des in Figur 1C dargestellten Graphens jeweils der Zeitpunkt einer vollen Umdrehung des rotierenden Reifens, von dem die Schallwellensignale aufgenommen wurden, angezeigt. Letztere wurden hierbei für Versuchszwecke mit einem Laser und einer entsrpechenden Laserschranke aufgenommen. Es kann an diesen angezeigten Zeitpunkten gesehen werden, dass sich die Rotation des Reifens während des Experiments beschleunigt.

Figur 1D zeigt ausschließlich die während der Phase A des Experiments mittels des Mikrofons aufgezeichnete Intensität der Schallwellen. Das in Figur 1D gezeigte Schallwellensignal umfasst dabei ausschließlich die Schallwellensignale aus der Figur 1C, welche in einer Frequenz von 35 bis 45 kHz liegen. Es ist gut ersichtlich, dass sich das Signalrauschverhältnis überraschend stark verbessert hat und insbesondere drei große Peaks pro Umdrehung des rotierenden Reifens detektiert werden können, wobei das Signal der ersten und dritten Leckage bereits während der zweiten Umdrehung (siehe gestrichelte Linien in Figur 1D stark verkleinert ist. Dies deutet darauf hin, dass die erste und dritte Leckage bereits stark abgedichtet wurden. Die zweite Leckage ist bis hin zur 23. Umdrehung zu erkennen und nimmt daher langsamer ab. Es ist jedoch genau zu erkennen, dass nicht nur die Anzahl der Leckagen mittels der gezeigten Methode erkannt werden konnte sondern auch wie unterschiedlich stark die verschiedenen Leckagen an einem Reifen abnehmen. Somit kann mithilfe dieser Methode eine Abdichtung während des

Fahrens beobachtet werden und zuverlässig erkannt werden, ob der Fahrer aufgrund der erfolgreich abgedichteten Leckage weiterfahren kann oder ob er anhalten muss.

### Experimentelle Beispiele:

### Messverfahren:

Mittels eine erfindungsgemäße Vorrichtung wie vorstehend beschrieben wurden die Schallwellensignale ein und derselben Leckage in den Laufstreifen eines Fahrzeugluftreifens mittels eines handelsüblichen Mikrofons gemessen und mittels verschiedenen Filtereinheiten gefiltert. Anschließend wurde das entsprechende Signalrausch-Verhältnis je nach verwendetem Filter ermittelt und in der nachstehenden Tabelle 1 angegeben. Die Rotationsfrequenz des Fahrzeugluftreifens war ca. 600 rpm. Das Mikrofon war dabei in Richtung des Laufstreifens des Fahrzeugluftreifens gerichtet und wies einen Abstand zu äußerem Oberfläche des Laufstreifens von 30 cm auf. Das erfasste Schallwellensignal wurde digitalisiert und mit einem herkömmlichen Computer und einer entsprechenden Software gefiltert.

### Ergebnisse:

Die Experimente wurden wie vorstehend durchgeführt. Im Anschluss wurden aus der Magnitude des größten gemessene Frequenzsignals während der ersten Umdrehung des pannenbehafteten Reifens zusammen mit dem während dieser ersten Umdrehung gemessenen Untergrundrauschen auf bekannte Weise das Signalrausch-Verhältnis berechnet. Die Ergebnisse sind in Tabelle 1 für jeden verwendeten Filter dargestellt, wobei die Messung mit dem Hochpassfilter für unter 15 kHz (s. Experiment 1) als Vergleich herangezogen wurde und auf 1 normiert wurde.

**Tabelle 1: Experimentelle Daten der erfindungsgemäß und nicht erfindungsgemäß durchgeführten Messverfahren**

| **Experiment** | **Filter** | **heraus gefilterter Bereich** | **Änderung des Signalrausch-Verhältnisses (SNR)** |
|---|---|---|---|
| 1 | Hochpass | unter 15 kHz | 1 |
| 2 | Hochpass | unter 20 kHz | 100 |
| 3 | Hochpass | unter 42 kHz | 100 |
| 4 | Bandpass | 38 bis 42 kHz | 1000 |
| 5 | Bandpass | 43 bis 47 kHz | 10 |
| 6 | Bandpass | 35 bis 45 kHz | 100 |

Der Bandpassfilter mit 38-42kHz kann sich in dem gewähltem Experiment mit dem bestem Signalrausch-Verhältnisses (kurz: SNR) absetzen (10- oder 100-fache Verbesserung im Vergleich zu den Hochpassfiltern oder den anderen Bandpassfiltern, vergleiche das vierte Experiment mit den anderen Experimenten 2 bis 6 der Tabelle 1). Überraschend ist hierbei, wie wichtig genau die Grenzen von 38 kHz als untere und 42 kHz als obere Grenze sind. Bei einem Vergleich der Experimente 3 und 4 fällt auf, dass die Geräusche mit Frequenzen von unter 38 Hz das SNR verschlechtern. Noch negativer ist jedoch die Verschlechterung des SNR wenn man den Vergleich der Frequenzen im Bereich von 38 bis 42 kHz (Experiment 4) mit denen des Experiments 5 vergleicht. Eine Aufnahme der Frequenzen von über 42 kHz scheinen daher überraschenderweise das SNR erheblich zu verschlechtern.

Allerdings kann je nach Umgebungsparametern der Vorrichtung und Zielsetzung (hier gibt es einen Zielkonflikt zwischen einer robusten Abschaltung oder empfindlichen Abschaltung) auch andere Parameter und Frequenzbereiche als vorteilhaft herausstellen. Filter mit Grenzfrequenzen unter 20 kHz erscheinen hingegen als grundsätzlich nachteilig, da der Anteil an Nebengeräuschen (Maschine, Reifenprofil etc.) zunimmt und so das SNR verschlechtert (vergleiche das erste und zweite Experiment der Tabelle 1).

## Patentansprüche

1. Fahrzeug umfassend:
- mindestens ein Fahrzeugrad mit einem einen Reifeninnenraum umfassenden Fahrzeugluftreifen
und
- ein, zwei oder mindestens drei Schallwellenempfänger zum mehrfachen oder kontinuierlichen Erfassen von Luftschallwellensignalen von dem Fahrzeugluftreifen des Fahrzeugrades,
wobei der eine Schallwellenempfänger oder einer der Schallwellenempfänger außerhalb des Reifeninnenraums des Fahrzeugluftreifens am Fahrzeug angebracht ist und dazu eingerichtet ist, die durch eine Leckage des Fahrzeugluftreifens entstehenden Luftschallwellen zu detektieren,
**dadurch gekennzeichnet, dass**
das Fahrzeug mindestens eine Filtereinheit umfasst, welche dazu eingerichtet ist, Signalanteile unter 15 kHz der von einem der Schallwellenempfänger erfassten Luftschallwellensignal herauszufiltern.

2. Fahrzeug nach Anspruch 1, wobei die Filtereinheit dazu eingerichtet ist, Signalanteile unter 20 kHz, der von einem der Schallwellenempfänger erfassten Luftschallwellensignal herauszufiltern, wobei die eine oder die mindestens eine Filtereinheit
- ein Hochpassfilter ist,
oder
- ein Bandpassfilter ist und der Bandpassfilter dazu eingerichtet ist, Signalanteile eines Luftschallwellensignals mit Frequenzen unter 35 kHz und über 45 kHz herauszufiltern, bevorzugt Signalanteile eines Luftschallwellensignals mit Frequenzen unter 38 kHz und über 42 kHz oder unter 28 kHz und über 36 kHz.

3. Fahrzeug nach einem der vorangehenden Ansprüche, wobei das Fahrzeug eine Steuerungseinheit umfasst, welche dazu eingerichtet ist,
- zwei oder mehr als zwei von einen oder mehreren der Schallwellenempfänger erfasste Luftschallwellensignale
oder
- zwei oder mehr als zwei von einer der Filtereinheiten gefilterte Luftschallwellensignale
zu vergleichen, wobei die Luftschallwellensingale von derselben Leckage stammen.

4. Fahrzeug nach einem der vorangehenden Ansprüche, wobei das Fahrzeugrad des Fahrzeuges oder der Fahrzeugluftreifen des Fahrzeugrades des Fahrzeugs einen Drucksensor zum Messen des Reifeninnendrucks umfasst und der Drucksensor mit einer oder der Steuerungseinheit verbunden ist, wobei die Steuereinheit dazu eingerichtet ist, in Abhängigkeit des Druckabfalls pro Zeiteinheit und in Abhängigkeit der Amplitude der erfassten oder gefilterten Luftschallwellensignale in dieser Zeiteinheit eine quantitative Aussage über die Größe und/oder Form der Leckage bestimmt.

5. Fahrzeug nach einem der vorangehenden Ansprüche, wobei der eine Schallwellenempfänger oder einer der Schallwellenempfänger oder sämtliche Schallwellenempfänger eine akustische Linse zum Verstärken der zu erfassenden Luftschallwellensignale umfasst und die akustische Linse auf eine Außenwand des Fahrzeugluftreifens des Fahrzeugrades des Fahrzeuges gerichtet ist.

6. Fahrzeug nach einem der vorangehenden Ansprüche, wobei zwei oder drei Schallwellenempfänger so am Fahrzeug angebracht und dafür vorgesehen sind, dass der eine Schallwellenempfänger Schallwellen einer Leckage im Laufstreifen des einen Fahrzeugluftreifens des Fahrzeuges messen kann und der zweite Schallwellenempfänger Schallwellen einer Leckage in der vom Fahrzeug aus gesehen äußeren Seitenwand des einen Fahrzeugluftreifens messen kann und optional der dritter Schallwellenempfänger Schallwellen einer Leckage in der vom Fahrzeug aus gesehen innere Seitenwand des einen Fahrzeugluftreifens messen kann.

7. Verfahren zum mehrfachen oder kontinuierlichen Erfassen von Luftschallwellensignalen von einem technischen Gummiartikel, der ein Fahrzeugluftreifen eines Fahrzeugrades eines Fahrzeuges ist, wobei das Verfahren die folgenden Schritte umfasst:
A) Bereitstellen des aufgeblasenen technischen Gummiartikels sowie eines oder mehrerer Schallwellenempfänger, wobei der aufgeblasene technische Gummiartikel
- eine ein- oder mehrlagige Gummischichtstruktur mit einer Außenwand und einer Innenwand, wobei die eine ein- oder mehrlagige Gummischichtstruktur bevorzugt eine Seitenwand oder ein Laufstreifen eines Fahrzeugluftreifen ist, und
- einen von der Gummischichtstruktur begrenzten Innenraum aufweist, wobei der Druck im von der Gummischichtstruktur begrenzten Innenraum des aufgeblasenen technischen Gummiartikels größer ist als der Umgebungsdruck und der Schallwellenempfänger außerhalb des Innenraums des aufgeblasenen technischen Gummiartikels angeordnet ist,
B) Bewirken einer Leckage in der Gummischichtstruktur des technischen Gummiartikel, wobei die Leckage als Schallquelle für den einen oder die mehreren Schallwellenempfänger verwendet wird und die Schallquelle bevorzugt eine Luftschallwellen mit einem Frequenzanteil von 15 kHz bis 75 kHz aufweist,
C) Mehrfaches oder kontinuierliches Erfassen von Schallwellensignalen von der Leckage
- mittels des einen oder eines der Schallwellenempfänger, sodass die Leckage als Schallquelle für den Schallwellenempfänger verwendet wird und zeitlich versetzte Luftschallwellensignale entstehen,
und/oder
- mittels mehrerer der Schallwellenempfänger, sodass die Leckage als Schallquelle für die Schallwellenempfänger verwendet wird und räumlich versetzte Luftschallwellensignale entstehen,
D) Vergleichen zweier oder mehrerer der zeitlich versetzten und/oder der räumlich versetzten Signale miteinander, wobei das Vergleichen bevorzugt mittels einer Steuerungseinheit durchgeführt wird,
wobei das Verfahren zwischen Schritt C) und D) den folgenden Schritt C-D) durchführt:
C-D) Herausfiltern der Signalanteile unter 15 kHz der in Schritt C) erfassten Luftschallwellensignale mittels einer Filtereinheit, sodass gefilterte Signale mit Signalanteilen von 15 kHz oder höher entstehen.

8. Verfahren nach Anspruch 7, wobei der technische Gummiartikel und der Schallwellenempfänger zumindest während Schritt C), bevorzugt während des gesamten Verfahrens, relativ zueinander bewegt werden, wobei bevorzugt der technische Gummiartikel relativ zum Schallwellenempfänger rotiert wird.

9. Verfahren nach einem der vorangehenden Ansprüche 7 oder 8, wobei die Filtereinheit
- ein Hochpassfilter, der dazu eingerichtet ist, Signalanteile unter 20 kHz der
von einem der Schallwellenempfänger erfassten Luftschallwellensignal herauszufiltern,
oder
- die Filtereinheit ein entsprechender Bandpassfilter ist und Schritt C-D) lautet:
Herausfiltern der Signalanteile des Schallwellenmesssignals mit Frequenzen unter 35 kHz und über 45 kHz, bevorzugt unter 38 kHz und über 42 kHz, sodass ein gefiltertes Signal mit einem Frequenzbereich von 35 kHz und über 45 kHz, bevorzugt unter 38 kHz und über 42 kHz, entsteht.

10. Verfahren nach einem der Ansprüche 7 bis 9, wobei die in Schritt B) bewirkte Leckage einen Durchmesser im Bereich von 1 µm bis 50 mm aufweist, bevorzugt 0,1 mm bis 20 mm.

## Claims

1. Vehicle comprising:
- at least one vehicle wheel with a pneumatic vehicle tyre comprising a tyre interior space
and
- one, two or at least three soundwave receivers for repeated or continuous detection of airborne soundwave signals from the pneumatic vehicle tyre of the vehicle wheel,
wherein the one soundwave receiver or one of the soundwave receivers is attached to the vehicle outside the tyre interior space of the pneumatic vehicle tyre and is designed to detect the airborne soundwaves produced by a leak in the pneumatic vehicle tyre,
**characterized in that**
the vehicle comprises at least one filter unit, which is designed to filter out signal components below 15 kHz of the airborne soundwave signals detected by one of the soundwave receivers.

2. Vehicle according to Claim 1, wherein the filter unit is designed to filter out signal components below 20 kHz of the airborne soundwave signals detected by one of the soundwave receivers, wherein the one or the at least one filter unit
- is a high-pass filter,
or
- is a bandpass filter and the bandpass filter is designed to filter out signal components of an airborne soundwave signal with frequencies below 35 kHz and above 45 kHz, preferably signal components of an airborne soundwave signal with frequencies below 38 kHz and above 42 kHz or below 28 kHz and above 36 kHz.

3. Vehicle according to one of the preceding claims, wherein the vehicle comprises a control unit which is designed to compare
- two or more than two airborne soundwave signals detected by one or more of the soundwave receivers
or
- two or more than two airborne soundwave signals filtered by one of the filter units,
wherein the airborne soundwave signals originate from the same leak.

4. Vehicle according to one of the preceding claims, wherein the vehicle wheel of the vehicle or the pneumatic vehicle tyre of the vehicle wheel of the vehicle comprises a pressure sensor for measuring the internal tyre pressure and the pressure sensor is connected to a or the control unit, wherein the control unit is designed to determine on the basis of the drop in pressure per unit of time and on the basis of the amplitude of the detected or filtered airborne soundwave signals in this unit of time a quantitative finding about the size and/or form of the leak.

5. Vehicle according to one of the preceding claims, wherein the one soundwave receiver or one of the soundwave receivers or all of the soundwave receivers comprise(s) an acoustic lens for amplifying the airborne soundwave signals to be detected and the acoustic lens is directed at an outer wall of the pneumatic vehicle tyre of the vehicle wheel of the vehicle.

6. Vehicle according to one of the preceding claims, wherein two or three soundwave receivers are attached to the vehicle such that and are provided such that the one soundwave receiver can measure soundwaves of a leak in the tread of the one pneumatic vehicle tyre of the vehicle and the second soundwave receiver can measure soundwaves of a leak in the sidewall of the one pneumatic vehicle tyre that is the outer side wall as seen from the vehicle and optionally the third soundwave receiver can measure soundwaves of a leak in the sidewall of the one pneumatic vehicle tyre that is the inner side wall as seen from the vehicle.

7. Method for repeated or continuous detection of airborne soundwave signals from a technical rubber article, which is a pneumatic vehicle tyre of a vehicle wheel of a vehicle,
wherein the method comprises the following steps:
A) providing the inflated technical rubber article and one or more soundwave receivers, wherein the inflated technical rubber article
- is a single-ply or multi-ply rubber layered structure with an outer wall and an inner wall, wherein the one single-ply or multi-ply rubber layered structure is preferably a sidewall or a tread of a pneumatic vehicle tyre,
and
- has an interior space delimited by the rubber layered structure, wherein the pressure in the interior space of the inflated technical rubber article that is delimited by the rubber layered structure is greater than the ambient pressure and the soundwave receiver is arranged outside the interior space of the inflated technical rubber article,
B) creating a leak in the rubber layered structure of the technical rubber article, wherein the leak is used as a sound source for the one or more soundwave receivers and the sound source preferably has airborne soundwaves with a frequency component of 15 kHz to 75 kHz,
C) repeated or continuous detection of soundwave signals from the leak
- by means of the one or one of the soundwave receivers, so that the leak is used as a sound source for the soundwave receiver and temporally offset airborne soundwave signals are produced,
and/or
- by means of a number of the soundwave receivers, so that the leak is used as a sound source for the soundwave receivers and spatially offset airborne soundwave signals are produced,
D) comparing two or more of the temporally offset and/or the spatially offset signals with one another, wherein the comparison is preferably carried out by means of a control unit,
wherein, between steps C) and D), the method carries out the following step C-D):
C-D) filtering out the signal components below 15 kHz of the airborne soundwave signals detected in step C) by means of a filter unit, so that filtered signals with signal components of 15 kHz or higher are produced.

8. Method according to Claim 7, wherein, at least during step C), preferably during the entire method, the technical rubber article and the soundwave receiver are moved relative to one another, wherein preferably the technical rubber article is rotated relative to the soundwave receiver.

9. Method according to either of the preceding Claims 7 and 8, wherein the filter unit
- is a high-pass filter which is designed to filter out signal components below 20 kHz of the airborne soundwave signal detected by one of the soundwave receivers,
or
- the filter unit is a corresponding bandpass filter and step C-D) comprises: filtering out the signal components of the soundwave measurement signal with frequencies below 35 kHz and above 45 kHz, preferably below 38 kHz and above 42 kHz, so that a filtered signal with a frequency range from 35 kHz and above 45 kHz, preferably below 38 kHz and above 42 kHz, is produced.

10. Method according to one of Claims 7 to 9, wherein the leak created in step B) has a diameter in the range from 1 µm to 50 mm, preferably 0.1 mm to 20 mm.

## Revendications

1. Véhicule, comprenant :
- au moins une roue de véhicule pourvue d'un pneumatique de véhicule comprenant un espace intérieur de pneu
et
- un, deux ou au moins trois récepteurs d'ondes sonores destinés à acquérir de multiples fois ou en continu des signaux d'ondes sonores aériennes provenant du pneumatique de véhicule de la roue de véhicule,
ledit récepteur d'ondes sonores ou l'un des récepteurs d'ondes sonores étant monté sur le véhicule à l'extérieur de l'espace intérieur de pneu du pneumatique de véhicule et étant conçu pour détecter les ondes sonores aériennes générées par une fuite du pneumatique de véhicule,
**caractérisé en ce que**
le véhicule comporte au moins une unité de filtrage, laquelle est conçue pour éliminer par filtrage des composantes de signal au-dessous de 15 kHz du signal d'ondes sonores aériennes acquis par l'un des récepteurs d'ondes sonores.

2. Véhicule selon la revendication 1, l'unité de filtrage étant conçue pour éliminer par filtrage des composantes de signal au-dessous de 20 kHz du signal d'ondes sonores aériennes acquis par l'un des récepteurs d'ondes sonores, ladite ou l'au moins une unité de filtrage
- étant un filtre passe-haut,
ou
- étant un filtre passe-bande et le filtre passe-bande étant conçu pour éliminer par filtrage des composantes de signal d'un signal d'ondes sonores aériennes ayant des fréquences inférieures à 35 kHz et supérieures à 45 kHz, de préférence des composantes de signal d'un signal d'ondes sonores aériennes ayant des fréquences inférieures à 38 kHz et supérieures à 42 kHz ou inférieures à 28 kHz et supérieures à 36 kHz.

3. Véhicule selon l'une des revendications précédentes, le véhicule comprenant une unité de commande, laquelle est conçue pour comparer
- deux ou plus de deux signaux d'ondes sonores aériennes acquis par un ou plusieurs des récepteurs d'ondes sonores
ou
- deux ou plus de deux des signaux d'ondes sonores aériennes filtrés par l'une des unités de filtrage
les signaux d'ondes sonores aériennes provenant de la même fuite.

4. Véhicule selon l'une des revendications précédentes, la roue de véhicule ou le pneumatique de véhicule de la roue de véhicule comportant un capteur de pression destiné à mesurer la pression interne du pneu et le capteur de pression étant relié à une ou à l'unité de commande, l'unité de commande étant conçue pour déterminer, en fonction de la chute de pression par unité de temps et en fonction de l'amplitude des signaux d'ondes sonores aériennes acquis ou filtrés dans cette unité de temps, une information quantitative concernant la taille et/ou la forme de la fuite.

5. Véhicule selon l'une des revendications précédentes, ledit récepteur d'ondes sonores ou l'un des récepteurs d'ondes sonores ou tous les récepteurs d'ondes sonores comprenant une lentille acoustique destinée à amplifier les signaux d'ondes sonores aériennes à acquérir, et la lentille acoustique étant dirigée vers un flanc extérieur du pneumatique de véhicule de la roue de véhicule du véhicule.

6. Véhicule selon l'une des revendications précédentes, deux ou trois récepteurs d'ondes sonores étant montés sur le véhicule de telle sorte et étant prévus pour que ledit récepteur d'ondes sonores puisse mesurer des ondes sonores d'une fuite dans la bande de roulement de l'un des pneumatiques de véhicule et le deuxième récepteur d'ondes sonores puisse mesurer des ondes sonores d'une fuite dans le flanc extérieur dudit pneumatique de véhicule, vu depuis le véhicule, et éventuellement le troisième récepteur d'ondes sonores puisse mesurer des ondes sonores d'une fuite dans le flanc intérieur dudit pneumatique de véhicule, vu depuis le véhicule.

7. Procédé d'acquisition multiple ou continue de signaux d'ondes sonores aériennes provenant d'un article technique en caoutchouc, lequel est un pneumatique de véhicule d'une roue de véhicule d'un véhicule,
le procédé comprenant les étapes suivantes :
A) fourniture de l'article technique en caoutchouc gonflé ainsi qu'un ou plusieurs récepteurs d'ondes sonores, l'article technique en caoutchouc gonflé
- étant une structure de couches de caoutchouc à une ou plusieurs couches avec une paroi extérieure et une paroi intérieure, ladite structure de couches de caoutchouc à une ou plusieurs couches étant de préférence un flanc ou une bande de roulement d'un pneumatique de véhicule,
et
- présentant un espace intérieur délimité par la structure de couches de caoutchouc, la pression dans l'espace intérieur de l'article technique en caoutchouc gonflé, délimité par la structure de couches de caoutchouc, étant supérieure à la pression ambiante et le récepteur d'ondes sonores étant disposé à l'extérieur de l'espace intérieur de l'article technique en caoutchouc gonflé,
B) provocation d'une fuite dans la structure de couches de caoutchouc de l'article technique en caoutchouc, la fuite étant utilisée comme source sonore pour ledit ou les plusieurs récepteurs d'ondes sonores, et la source sonore présentant de préférence une onde sonore aérienne ayant une composante de fréquence de 15 kHz à 75 kHz,
C) acquisition multiple ou continue des signaux d'ondes sonores de la fuite
- au moyen dudit ou de l'un des récepteurs d'ondes sonores, de sorte que la fuite est utilisée comme source sonore pour le récepteur d'ondes sonores et que des signaux d'ondes sonores aériennes décalés dans le temps sont produits, et/ou
- au moyen de plusieurs des récepteurs d'ondes sonores, de sorte que la fuite est utilisée comme source sonore pour les récepteurs d'ondes sonores et que des signaux d'ondes sonores aériennes décalés dans l'espace sont produits,
D) comparaison entre eux de deux ou plus des signaux décalés dans le temps et/ou décalés dans l'espace, la comparaison étant effectuée de préférence au moyen d'une unité de commande,
le procédé exécutant l'étape C-D) suivante entre les étapes C) et D) :
C-D) élimination par filtrage des composantes de signal au-dessous de 15 kHz des signaux d'ondes sonores aériennes acquis à l'étape C) au moyen d'une unité de filtrage, de manière à obtenir des signaux filtrés avec des composantes de signal de 15 kHz ou plus.

8. Procédé selon la revendication 7, l'article technique en caoutchouc et le récepteur d'ondes sonores étant déplacés l'un par rapport à l'autre au moins pendant l'étape C), de préférence pendant tout le procédé, l'article technique en caoutchouc étant de préférence mis en rotation par rapport au récepteur d'ondes sonores.

9. Procédé selon l'une des revendications 7 ou 8, l'unité de filtrage
- étant un filtre passe-haut, qui est conçu pour éliminer par filtrage des composantes de signal au-dessous de 20 kHz du signal d'ondes sonores aériennes acquis par l'un des récepteurs d'ondes sonores,
ou
- l'unité de filtrage étant un filtre passe-bande correspondant et les étapes C-D) étant les suivantes :
élimination par filtrage des composantes de signal du signal de mesure d'ondes sonores ayant des fréquences inférieures à 35 kHz et supérieures à 45 kHz, de préférence inférieures à 38 kHz et supérieures à 42 kHz, de manière à obtenir un signal filtré ayant une plage de fréquences de 35 kHz et supérieures à 45 kHz, de préférence inférieures à 38 kHz et supérieures à 42 kHz.

10. Procédé selon l'une des revendications 7 à 9, la fuite provoquée à l'étape B) présentant un diamètre compris dans la plage de 1 µm à 50 mm, de préférence de 0,1 mm à 20 mm.
